# EUROPÄISCHE PATENTANMELDUNG

(11) **EP 1 264 638 A2**
(43) Veröffentlichungstag der Anmeldung: **11.12.2002**
(21) Anmeldenummer: 02010895.7
(22) Anmeldetag: 16.05.2002
(51) Int. Cl.: B03B 9/06

(54) **Einrichtung zur mehrstufigen Aufbereitung von Bildröhren und/oder Bildröhrenbruch**

(30) Priorität: 06.06.2001 AT 8772001
(71) Anmelder: E. S. R. Elektro-und Elektronik-Schrott Recycling GmbH, 6511 Zams (AT)
(72) Erfinder: Walser, Günther, 6511 Zams (AT); Haim, Heinz, 6511 Zams (AT); Haim, Manfred, 6511 Zams (AT); Senn, Johannes, 6500 Stanz 132 (AT)
(74) Vertreter: Torggler, Paul Norbert, Dr.

(57) **Zusammenfassung**

Einrichtung zur mehrstufigen Aufbereitung von Bildröhren und/oder Bildröhrenbruch, wobei sie mindestens eine Trockenreinigungsstufe (10) und mindestens eine Naßreinigungsstufe (12,13) aufweist, wobei mindestens eine Trockenreinigungsstufe (10) mindestens einer vorzugsweise allen Naßreinigungsstufen (12,13) vorgeschaltet ist.

## Beschreibung

Die vorliegende Erfindung betrifft eine Einrichtung zur mehrstufigen Aufbereitung von Bildröhren und/oder Bildröhrenbruch.

Gattungsgemäße Einrichtungen sind beim Stand der Technik bekannt. Sie dienen der Entsorgung bzw. Verwertung von Bildröhren, welche aus unterschiedlichem Glas mit Beschichtung (Schirmglas, Konusglas), metallischen Bestandteilen (Lochmaske oder Schattenmaske, Metallrahmen) sowie Kunststoffbauteilen bestehen. Ein beim Stand der Technik bekanntes gängiges Verfahren wird in den Schriften DE 4314013 A1, DE 4229684, DE 9413310 U1 und EP 05693143 A3 gezeigt. Bei den gezeigten Anlagen bzw. Verfahren wird das Konusglas zunächst vom Bildschirmglas durch Erhitzen bzw. Hitzebehandlungen abgetrennt und die Leuchtbeschichtung des Bildschirmglases anschließend durch Bürsten und Saugen im Trockenverfahren entfernt. Diese in den genannten Schriften gezeigten Verfahren bzw. Anlagen haben den Nachteil, daß sie zum einen keine vollständige Reinigung des Glases von der Leuchtbeschichtung bzw. anderen Beschichtungen garantieren und zum anderen teilweise mit einem sehr hohen manuellen Aufwand verbunden sind. Alternativ ist aus der DE 4242631 A1 ein Verfahren bekannt, bei dem die Bildröhren zunächst zerkleinert und anschließend der Glasbruch unter Verwendung eines ablösenden Mittels gewaschen wird. Bei diesem Verfahren wird vergleichsweise viel Wasser durch die abzuwaschenden Stoffe relativ stark kontaminiert und muß entsprechend aufwendig anschließend aufbereitet werden.

Aufgabe der Erfindung ist es nun, eine Einrichtung zur Aufbereitung von Bildröhren zu Verfügung zu stellen, bei der die oben genannten Nachteile des Standes der Technik beseitigt sind.

Dies wird erfindungsgemäß dadurch erreicht, daß die Einrichtung mindestens eine Trockenreinigungsstufe und mindestens eine Naßreinigungsstufe aufweist, wobei mindestens eine Trockenreinigungsstufe mindestens einer vorzugsweise allen Naßreinigungsstufen vorgeschaltet ist.

Bei dieser erfindungsgemäßen kombinierten Verfahrensweise wird durch die mindestens eine vorgeschaltete Trockenreinigungsstufe zunächst der Großteil der Beschichtung im trockenen Zustand rückgewonnen. Dieser Teil der Beschichtung des Bildröhrenglases kann dann ohne weiteren Aufwand unmittelbar einer weiteren Verwendung bzw. Aufbereitung zugeführt werden. Ein weiterer Vorteil dieser Vorgehensweise besteht darin, daß im Sinne eines Nachweises und der Quantifizierung der Umweltverträglichkeit dieses Verfahrens der Anteil bzw. die Menge der rückgewonnenen Beschichtung einfach bestimmt und nachgewiesen werden kann. Durch die mindestens eine der Trockenreinigung nachgeschaltete Naßreinigungsstufe wird anschließend eine vollständige Reinigung des Bildröhrenglases auch von Restrückständen der Beschichtung gewährleistet. Darüber hinaus sehen günstige Ausführungsformen dieser Einrichtung vor, daß die einzelnen Stufen weitestgehend vollautomatisch ablaufen.

Eine günstige Ausführungsvariante sieht hierbei vor, daß die Trockenreinigungsstufe mindestens eine Entstaubungsanlage aufweist, wobei die Entstaubungsanlage ein im wesentlichen geschlossenes Volumen aufweist, in welchem mindestens eine, vorzugsweise mehrere Düsen zum Abblasen des Bildröhrenglases mit einem unter Druck stehendem Gas, vorzugsweise Luft unter 7 bar Druck, angeordnet ist (sind). Bei dieser Art der Trockenreinigungsstufe wird eine besonders effektive Ausfilterung der abgeblasenen Staubpartikel erreicht, indem mindestens eine Entstaubungsanlage eine Filteranlage zum Abfiltern der vom Bildröhrenglas abgeblasenen Staubpartikel aufweist, wobei die Abluft aus dem im wesentlichen geschlossenen Volumen der Filteranlage zuströmt. Diese Art der Entstaubungsanlage bildet somit eine nach außen hin abgeschlossene Einheit, bei der zum einen kein Beschichtungsstaub an die Außenwelt gelangt und zum anderen die vom Bildröhrenglas abgelöste Beschichtung nahezu vollständig in einfacher Weise von den Filtern rückgewonnen wird.

Bezüglich der Naßreinigungsstufe ist es günstig, daß mindestens eine Naßreinigungsstufe mindestens eine Waschtrommel aufweist. Hierbei können in der Kiesgewinnungsindustrie bekannte Waschtrommeln verwendet werden. In diesen Waschtrommeln wird das Bildröhrenglas zum einen gründlich nachgereinigt, zum anderen erfolgt zusätzlich auch eine weitere Zerkleinerung und ein Abrunden der Bildröhrenglasbruchstücke. Der Grad der Zerkleinerung und der Reinigung kann hierbei durch die Verweildauer bzw. die Anzahl der Durchläufe des Bildröhrenglases durch die Waschtrommel gesteuert werden.

Zur Endreinigung kann darüber hinaus in günstigen Ausführungsvarianten vorgesehen sein, daß mindestens eine Naßreinigungsstufe mindestens eine Einrichtung zur Bebrausung aufweist. Hierbei ist es des weiteren vorteilhaft, daß mindestens eine Einrichtung zur Bebrausung mindestens einer Waschtrommel nachgeschaltet ist.

Des weiteren ist es günstig, daß die Einrichtung mindestens eine Aufgabeeinrichtung für im wesentlichen unzerbrochene Bildröhren und mindestens eine weitere Aufgabeeinrichtung für Bildröhrenbruchstücke aufweist. Der Vorteil dieser Ausbildungsform der erfindungsgemäßen Einrichtung besteht darin, daß sowohl Bildröhren im Ganzen (vorab belüftet und mit vorab entfernter Ablenkeinheit) als auch Bildröhrenbruch über getrennte Aufgabeeinrichtungen der Anlage zugeführt werden können, wobei durch die einzelnen Prozeßschritte ein optimaler Reinigungseffekt erzielt wird. Als Endprodukt wird hierbei Glasgranulat ohne jegliche Fremdstoffe (Leuchtstoffe, Metall-, Kunststoffund Holzfraktionen) gewonnen. Dies kann einer weiteren Verwertung zugeführt werden. Bei der Aufbereitung von nahezu unzerbrochenen Bildröhren ist es günstig, daß der Aufgabeeinrichtung für im wesentlichen unzerbrochene Bildröhren eine Einrichtung zur Trennung von Konus- und Bildschirmglas und vorzugsweise ein Brecher zum Vorbrechen des Bildschirmglases nachgeschaltet ist. Eine weitere günstige Ausführungsvariante sieht vor, daß mindestens ein Windsichter zum Abscheiden von Kunststoff und/oder Holzfraktionen der ersten Naßreinigungsstufe vorgeschaltet ist.

Weitere Merkmale und Einzelheiten der vorliegenden Erfindung ergeben sich aus der nachfolgenden Figurenbeschreibung. Dabei zeigt:
- Fig. 1: eine schematische Darstellung einer Bildröhre nach dem Stand der Technik und
- Fig. 2: eine schematische Darstellung einer Ausführungsvariante der erfindungsgemäßen Einrichtung.

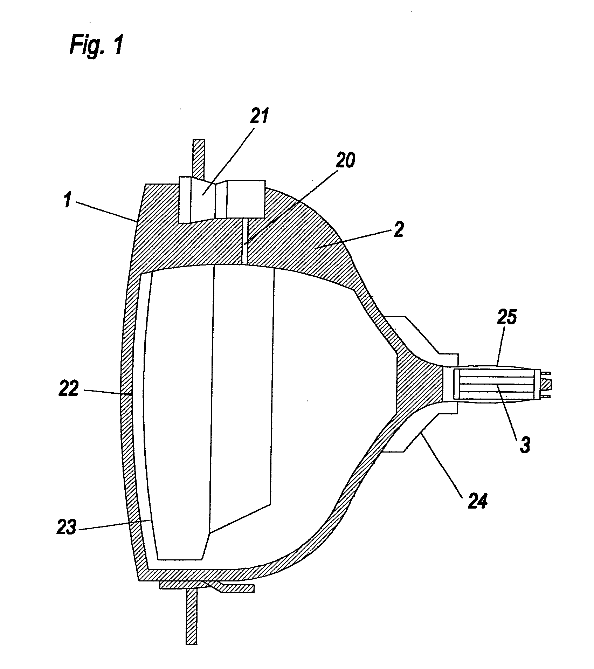

Fig. 1 zeigt eine schematische Seitenansicht einer Bildröhre mit einem Bildschirmglas 1, einem Konusglas 2 sowie einer Elektronenkanone 3. Die des weiteren in den zu verwertenden Bildröhren angeordneten Komponenten wie Lochmaske (hier nicht dargestellt), Schattenmaske 23, Metallrahmen 21 sowie die Steuerelektronik der Elektronenkanone 3 und die Ablenkeinheit 24 sind beim Stand der Technik bekannt. Bei Bildröhren ist zwischen Monochrom- (z.B. Schwarzweiß) und Farbbildröhren zu unterscheiden, Monochrombildröhren bestehen aus einer einzigen, bleihaltigen Glassorte. Im Inneren enthalten sie keine Metallteile und die gesamte Bildschirminnenseite ist gleichmäßig mit Leuchtstoffen 22 beschichtet.

Farbbildröhren sind dagegen aus unterschiedlichen Glassorten aufgebaut. Der Bildschirm 1 (Vorderseite) besteht aus barium- (bei Röhren aus europäischer Produktion) bzw. strontiumhaltigen (bei Röhren aus Fernost) Glassorten. Die Stoffe müssen dem Glas beigesetzt werden, um die im Inneren erzeugte hochenergetische Strahlung abzuschirmen. Im Konusglas 2 verwendet man zur Abschirmung der Strahlen Bleioxid, welches für das Schirmglas nicht verwendet werden kann, da es nach einiger Zeit der Elektronenbestrahlung zu einer Verfärbung führen kann.

Der Hals in dem sich die Elektronenkanone 3 befindet, besteht ebenfalls aus Bleiglas, jedoch mit etwas höherem Bleigehalt als das Konusglas 2. Schirmglas 1 und Konusglas 2 werden bei der Herstellung mit einem Glaslot 20 (Glasfritte) miteinander verbunden, das hauptsächlich aus Bleioxid besteht.

Die Innenseite des Schirmglases 1 ist mit Leuchtstoffen 22 beschichtet. Die Leuchtstoffe 22 der Leuchtschicht bestehen aus einem Gemisch, das z.B. Zinksulfid, die seltenen Erden Yttrium, Europium aber auch Edelmetalle wie Gold und Silber enthalten kann.

Die Beschichtung von Hals- 25 und Konusglas 2 besteht aus toxikologisch unbedenklichen Stoffen, wie Aluminium, Eisenoxid oder Graphit.

Die Schattenmaske 23 besteht aus Eisen und Stahl und dient einer exakten Ansteuerung der einzelnen Bildpunkte durch den Elektronenstrahl, der aus der Elektronenkanone 3 austritt.

Die ebenfalls zur Ansteuerung der Bildpunkte dienende Ablenkeinheit 24 besteht aus Kupferdrähten, Eisenteilen und einer Kunststoffhalterung.

Die Röhre selbst ist von einem Metallrahmen aus Stahl umgeben, der als Implosionsschutz 21 dient und über den die Bildröhre in den jeweiligen Gerätegehäusen befestigt werden kann.

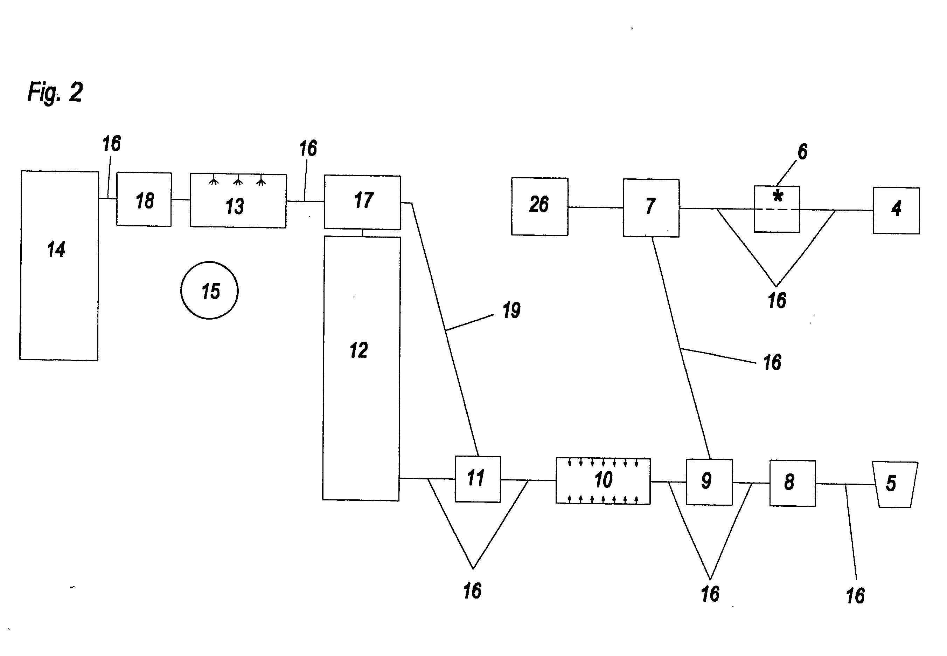

In Fig. 2 ist eine Ausführungsvariante der erfindungsgemäßen Einrichtung dargestellt. Sie umfaßt getrennte Aufgabestationen (Aufgabeeinrichtung) 4 und 5 für im wesentlichen unzerstörte Bildröhren und Bildröhrenbruch, eine Vorshredderanlage 6 für Bildröhren im ganzen, eine Wendeeinrichtung 7 sowie eine Vorbrechanlage 8. Des weiteren werden die Bildröhren unabhängig von der Aufgabestation in der sie aufgegeben werden über ein Magnetabscheider 9 der Trockenabsaugung 10 und anschließend dem Windsichter 11 zugeführt. Anschließend wird das so vorbehandelte Material der Waschtrommel 12 und anschließend der Bebrausung 13 mit Zyklon 18 zugeführt. Im dargestellten Ausführungsbeispiel erfolgt anschließend eine Trennung der einzelnen Korngrößen an der Station 14 sowie eine Aufbereitung des Waschwassers im Klärturm 15. Der Transport zwischen den Stationen erfolgt über Fördereinrichtungen 16 vorzugsweise über Förderbänder. Diese genannten einzelnen Stationen werden im folgenden beschrieben:

Zunächst erfolgt nach vorhergehender Belüftung und Entfernung der Ablenkeinheit jedoch mit Metallrahmen (Implosionsschutz) die Aufgabe der Bildröhren im Ganzen beziehungsweise des Bildröhrenbruchs den in getrennten jeweils zugeordneten Aufgabeeinrichtungen 4 oder 5. Die Aufgabe der Bildröhren im Ganzen erfolgt händisch in der Aufgabeeinrichtung 4. Ein Förderband 16 führt anschließend zur Vorshredderanlage 6. Der Bildröhrenbruch (mit Eisen und Kunststoffanteilen) wird über einen ummantelten und mit einer Absaugung versehenen Aufgabetrichter 5 der Aufbereitungseinrichtung zugeführt. Der Aufgabetrichter 5 befindet sich im Freien, ist regenunempflindlich und hat eine Geschwindigkeitsregelung zur Vorbrechanlage 8. Die Beschickung des Bildröhrenbruchs in den Aufgabetrichter 5 erfolgt mittels Radlader (hier nicht dargestellt).

Im Vorshredder 6 erfolgt die Trennung in Schirmglas 1 und Konusglas 2 der händisch über die Aufgabeeinrichtung 4 und ein Förderband 16 angelieferten im wesentlichen ganzen Bildröhren. Die Trennung der 2 Komponenten erfolgt mittels eines höhen- und geschwindigkeitsverstellbaren Vorshredders 6, der das Konusglas 2 bis zum Metallrahmen (Implsionsschutz) vom Schirmglas 1 abtrennt. Das abgetrennte Konusglas 2 wird in der Wendeeinrichtung 7 vom Schirmglas 1 getrennt. Die im Glasinnenteil (Schirmglas 1 mit Schattenmaske) befindlichen Glaskomponenten des Konusglases 2 werden durch die Wendung und einen an sich bekannten Vibrorost (hier nicht dargestellt) vom Schirmglas 1 abgeschieden. Das Konusglas 2 wird über ein Förderband 16 in einen eigens dafür vorgesehenen Betonpunker zur Zwischenlagerung 26 transportiert. Das Konusglas wird dann entweder je nach Bedarf an Bleihütten weitergegeben (wobei das enthaltene Bleioxid während des Schmelzprozesses reduziert und das Blei metallisch gewonnen werden kann; das Glas fungiert dabei als Schlackenbildner, und ersetzt den sonst für die Verschlackung benötigten Quarzsand), oder ein zweites Mal der Aufbereitungseinrichtung als Bildröhrenbruch über den Aufgabetrichter 5 (z.B. mittels Radlader) zu dosiert, und anschließend gemeinsam mit dem Bildschirmglas als Zuschlagstoff für Beton verwendet.

Das Schirmglas 1 mit Metallrahmen, Schattenmaske und etwaigen anhaftenden Kunststoff- und Holzfraktionen wird zur Vorbrechanlage 8 mittels Förderanlage 16 weiter transportiert. Der Vorbrecher 8 weist eine Maulbreite von 900 x 600 auf und zerkleinert das Aufgebaut (Schirmglas 1 mit Metallrahmen und Schattenmaske, Bildröhrenbruch) auf die gewünschte Größe, wobei der Brecherausgang mechanisch verstellbar ist.

Im Vorbrecher 8 wird das Schirmglas 1 der aufgegebenen im wesentlichen vollständigen Bildröhren sowie der über den Aufgabetrichter 5 aufgegebene Bildröhrenbruch zusammengeführt.

Nach der Vorbrechanlage 8 fällt das gebrochene Material auf ein Förderband 16 mit einer Breite von vorzugsweise 1 m und wird zum Magnetabscheider 9 weiter transportiert. Über dem Austrageband befindet sich hier ein höhenverstellbarer Magnet, der die Metallanteile (Metallrahmen, Schattenmaske) vom Glasbruch trennt (nicht im Detail dargestellt).

In weiterer Folge wird der Glasbruch über einen Lochrost durch eine Entstaubungsanlage bzw. Trockenabsaugung 10 befördert, wobei über Düsen von oben und unten mittels Luft unter vorzugsweise 7 bar Druck die auf dem Glasbruch anhaftende Leuchtstoffbeschichtung 22 von Glas abgeblasen wird. Über eine Filteranlage (hier nicht dargestellt) werden die Leuchtstoffteilchen abgefiltert und die gereinigte Abluft über Dach abgeführt. Die von den Filtern zurückgehaltenen Leuchtstoffteilchen werden in Spezialbehältern gesammelt und in weiterer Folge einem geeigneten Verwertungsunternehmen zugeführt.

Im Windsichter 11 wird der Glasbruch von etwaigen Kunststoff- und Holzfraktionen getrennt.

In der Waschtrommel 12 wird der von der Leuchtstoffschicht befreite Glasbruch einer Nachreinigung unterzogen. Der eisen- und staubfreie Glasbruch wird in der 6 m langen Waschtrommel 12 durch die Drehung und Fallhöhe sowie das gegenseitigen Aneinanderreiben unter Zusatz von Wasser von noch eventuell anhaftenden Leuchtstoffteilchen befreit. Am Ende der Trommel ist eine Rundsiebanlage, welche die einzelnen Kornfraktionen (z.B. 0 - 16 mm und größer 16 mm) trennt, nachgeschaltet. Die Kornfraktion größer 16 mm fällt in eine unter der Waschtrommel 12 angebrachte Nachbrechanlage 17, mit einem Einlauf von 800 x 200 mm. Dieser vergleichsweise grobe Glasbruch wird in weiterer Folge über das Förderband 19 wieder dem Windsichter 11 und anschließend der Stufe 12 zugeführt. Damit wird erreicht, daß noch eventuell anhaftende Kunststoff- bzw. Klebepartikel vom Glasbruch abgeschieden werden, bzw. der Glasbruch durch eine weitere Zuführung zur Stufe 12 durch die zusätzliche Reibung abgerundet wird und somit bei einer Wiederverwertung den Kriterien des Arbeitnehmerschutzes entspricht.

Zusätzlich wird der Glasbruch noch einem dritten Reinigungseffekt unterzogen, indem in der Bebrausung 13 mit anschließendem Zyklon 18 die Glasbruchfraktion 0 - 16 mm einer Bebrausung mit Frischwasser unterzogen wird. Hierdurch werden letzte Fremdstoffe und anhaftendes Schmutzwasser vom Glasbruch entfernt, wobei die Glasfraktion mit der Körnung 2 - 16 mm, in einer Trennungseinrichtung 14 für die einzelnen Korngrößen abgetrennt und in einem eigenen Betonbunker zwischengelagert wird.

Das bei der Bebrausung 13 anfallende Wasser wird zu einem Zyklon 18 weitergeleitet, indem der Glassand (Korngrößenfraktion 0-2 mm) vom Wasser getrennt wird. Die dabei abgeschiedene Korngrößenfraktion 0-2 mm (Glassand bzw. Quarzsand) wird über ein Förderband in einen separaten Betonbunker (hier nicht dargestellt) befördert und zwischengelagert.

Das in der Waschtrommel 12 und im Zyklon 18 anfallende Schmutzwasser wird über hier nicht dargestellte in einen Klärturm 15 geleitet. Im Klärturm 15 werden mittels eines Flockungsmittels die Schmutzpartikel vom Wasser in einer Absetzhöhe von vorzugsweise 8 m getrennt. Unter dem Schlammtrichter ist für eine Nachreinigung ein Filter situiert (hier nicht dargestellt). Das gereinigte Wasser wird wieder dem geschlossenen Kreislauf zugeführt.

## Patentansprüche

1. Einrichtung zur mehrstufigen Aufbereitung von Bildröhren und/oder Bildröhrenbruch, **dadurch gekennzeichnet, daß** sie mindestens eine Trockenreinigungsstufe (10) und mindestens eine Naßreinigungsstufe (12,13) aufweist, wobei mindestens eine Trockenreinigungsstufe (10) mindestens einer vorzugsweise allen Naßreinigungsstufen (12,13) vorgeschaltet ist.

2. Einrichtung zur mehrstufigen Aufbereitung von Bildröhren und/oder Bildröhrenbruch mit mindestens einer Trockenreinigungsstufe insbesondere nach Anspruch 1, **dadurch gekennzeichnet, daß** die Trockenreinigungsstufe (10) mindestens eine Entstaubungsanlage aufweist, wobei die Entstaubungsanlage ein im wesentlichen geschlossenes Volumen aufweist, in welchem mindestens eine, vorzugsweise mehrere Düsen zum Abblasen des Bildröhrenglases mit einem unter Druck stehendem Gas, vorzugsweise Luft unter 7 bar Druck, angeordnet ist (sind).

3. Einrichtung nach Anspruch 2, **dadurch gekennzeichnet, daß** mindestens eine Entstaubungsanlage (10) eine Filteranlage zum Abfiltern der vom Bildröhrenglas abgeblasenen Staubpartikel aufweist, wobei die Abluft aus dem im wesentlichen geschlossenen Volumen der Filteranlage zuströmt.

4. Einrichtung nach einem der Ansprüche 1 bis 3, **dadurch gekennzeichnet, daß** mindestens eine Naßreinigungsstufe (12) mindestens eine Waschtrommel aufweist.

5. Einrichtung nach einem der Ansprüche 1 bis 4, **dadurch gekennzeichnet, daß** mindestens eine Naßreinigungsstufe (13) mindestens eine Einrichtung zur Bebrausung aufweist.

6. Einrichtung nach Anspruch 5, **dadurch gekennzeichnet, daß** mindestens eine Einrichtung (13) zur Bebrausung mindestens einer Waschtrommel (12) nachgeschaltet ist.

7. Einrichtung nach einem der Ansprüche 1 bis 6, **dadurch gekennzeichnet, daß** sie mindestens eine Aufgabeeinrichtung (4) für im wesentlichen unzerbrochene Bildröhren und mindestens eine weitere Aufgabeeinrichtung (5) für Bildröhrenbruchstücke aufweist.

8. Einrichtung nach einem der Ansprüche 1 bis 7, **dadurch gekennzeichnet, daß** der Aufgabeeinrichtung (4) für im wesentlichen unzerbrochene Bildröhren eine Einrichtung (6) zur Trennung von Konus- (2) und Bildschirmglas (1) und vorzugsweise ein Brecher (8) zum Vorbrechen des Bildschirmglases nachgeschaltet ist.

9. Einrichtung nach einem der Ansprüche 1 bis 8, **dadurch gekennzeichnet, daß** mindestens ein Windsichter (11) zum Abscheiden von Kunststoff und/oder Holzfraktionen der ersten Naßreinigungsstufe vorgeschaltet ist.
